# EUROPEAN PATENT APPLICATION

(11) **EP 1 553 409 A1**
(43) Date of publication of application: **13.07.2005**
(21) Application number: 03758728.4
(22) Date of filing: 15.10.2003
(51) Int. Cl.: G01N 31/00, G01N 21/78, C09K 11/06

(54) **REAGENTS FOR THE MEASUREMENT OF PEROXYNITRITES**

(30) Priority: 16.10.2002 JP 2002301291
(71) Applicant: DAIICHI PURE CHEMICALS CO., LTD., Chuo-ku Tokyo 103-0027 (JP); Nagano, Tetsuo, Suginami-ku, Tokyo 167-0032 (JP)
(72) Inventor: NAGANO, Tetsuo, Suginami-ku, Tokyo 167-0032 (JP); SETSUKINAI, Ken-ichi, Edogawa-ku, Tokyo 134-0087 (JP); URANO, Yasuteru, Takatsu-ku, Kawasaki-shi, Kanagawa 213-0 (JP)
(74) Representative: Godemeyer, Thomas, Dr.
(86) International application number: PCT/JP2003/013179
(87) International publication number: WO 2004/040296

(57) **Abstract**

A reagent for measuring peroxynitrite comprising a compound represented by the following general formula (I): 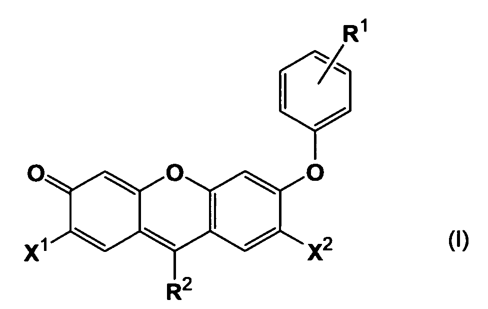 wherein R¹ represents an amino group, or hydroxy group; R² represents a 2-carboxyphenyl group; and X¹ and X² independently represent hydrogen atom, or a halogen atom (e.g., 2-[6-(4'-hydroxy)phenoxy -3H-xanthen-3-on-9-yl]benzoic acid, or 2-[6-(4'-amino)phenoxy-3H-xanthen-3-on-9-yl]benzoic acid) or a salt thereof, which does not react with superoxide or nitrogen monoxide, a precursor of peroxynitrite, and specifically reacts with peroxynitrite.

## Description

### Technical Field

The present invention relates to a reagent for measuring peroxynitrite.

### Background Art

In recent years, it has been revealed that nitrogen oxide (NO) is an endogenous physiologically active substance having various functions responsible for, for example, blood vessel relaxation, regulation of nervous signal transduction, control of cell death, carcinogenesis, and the like. It is considered that NO itself has relatively weak reactivity, and is converted to various reactive nitrogen species (RNS) having high reactivity by reactions with various active oxygen species, metal ions and the like simultaneously produced in living bodies to cause cell injury. More recently, there are many reports teaching that various signal transduction routes are regulated by modification of proteins with RNS, and not only NO but RNS have been greatly focused.

Peroxynitrite (ONOO⁻) is a typical substance among RNS, and is produced by a reaction of NO and superoxide. Reaction rate of this production reaction is mostly limited by diffusion, and when superoxide produced by NADPH oxidase or the like and NO produced by NO synthetase (NOS) coexist, ONOO⁻ is immediately produced. ONOO⁻ has high oxidation ability, for example, it achieves hydroxylation of an aromatic ring, and has characteristic reactivities such as, for example, efficient nitration of tyrosine. Recent reports have pointed out that phosphorylation of tyrosine is inhibited by nitration of tyrosine, and thus ONOO⁻ has an important effect on signal transduction systems such as MAPK and PI3K/Akt cascades.

Examples of the methods for detecting ONOO⁻ developed so far include (1) a method of performing staining by using an antibody directed to nitrotyrosine produced by nitration of tyrosine, and (2) a method of detecting singlet oxygen produced by reaction of ONOO⁻ and H₂O₂ on the basis of light emission at 1.3 µm. Although the method (1) achieves high specificity and has been widely used, the method has a problem in that ONOO⁻ cannot be detected in real time by applying the method to a living cell system, because staining should be performed with antibodies. In addition to the aforementioned two methods, (3) a chemiluminescence method using luminol, and (4) a fluorometric detection method using a fluorescence probe to detect overall active oxygen species such as 2',7'-dichlorodihydrofluorescein (DCFH) have been used. However, these methods fail to achieve specificity, and therefore reliable detection cannot be expected even if various inhibitors are used. For example, in the method (4), DCFH reacts with both of NO and superoxide to give an increase in fluorescence, and therefore it is impossible to distinguish whether ONOO⁻ is detected, or NO or superoxide is detected.

While arylated fluorescein derivatives are known to be useful reagents for measuring active oxygen (International Patent Publication WO01/64664). However, this publication neither suggests nor teaches that the fluorescein derivatives have reactivity with peroxynitrite.

### Disclosure of the Invention

An object of the present invention is to provide a means for specifically detecting peroxynitrite. In particular, the object of the present invention is to provide a reagent for measuring peroxynitrite that does not react with NO or superoxide, which are precursors of peroxynitrite, and can specifically react with peroxynitrite. The inventors of the present invention conducted various researches to solve the foregoing object. As a result, they found that compounds represented by the following general formula (I) had the aforementioned characteristics, and were useful as reagents for specifically detecting peroxynitrite. The present invention was achieved on the basis of the findings.

The present invention thus provides a reagent for measuring peroxynitrite comprising a compound represented by the following general formula (I) or a salt thereof: 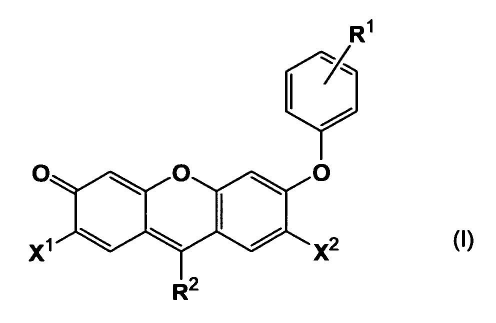 wherein R¹ represents a substituted or unsubstituted amino group, or hydroxy group; R² represents a 2-carboxyphenyl group which may be substituted; and X¹ and X² independently represent hydrogen atom, or a halogen atom. According to a preferred embodiment, the present invention provides the aforementioned measuring reagent, which is 2-[6-(4'-hydroxy)phenoxy-3H-xanthen-3-on-9-yl]benzoic acid, or 2-[6-(4'-amino)phenoxy-3H-xanthen-3-on-9-yl]benzoic acid.

From another aspect, the present invention provides a method for measuring peroxynitrite, which comprises the steps of (A) reacting a compound represented by the aforementioned general formula (I) or a salt thereof and peroxynitrite, and (B) measuring fluorescence of a dephenylated compound (a compound of the aforementioned general formula (I) wherein the phenyl group on which R¹ substitutes is replaced with hydrogen atom) or a salt thereof produced in the aforementioned step (A). Further, from another aspect, the present invention also provides use of a compound represented by the aforementioned general formula (I) for manufacture of the aforementioned reagent for measuring peroxynitrite.

### Best Mode for Carrying out the Invention

In the aforementioned general formula (I), R¹ represents a substituted or unsubstituted amino group, or hydroxy group. Examples of the substituent on the amino group include a C₁₋₄ alkyl groups such as methyl group and ethyl group (the alkyl group may be a linear, branched, or cyclic alkyl group, or an alkyl group consisting of any combination of these groups), an aralkyl group such as benzyl group and phenethyl group, and the like. However, the substituent on the amino group is not limited to these examples. When two substituents exist on the amino group, they may be the same or different. The amino group is preferably unsubstituted amino group. The substitution position of the amino group or hydroxy group represented by R¹ is not particularly limited, and the para-position is preferred. R² represents a 2-carboxyphenyl group which may be substituted, and unsubstituted 2-carboxyphenyl group is preferred.

X¹ and X² independently represent hydrogen atom, or a halogen atom, and it is preferred that X¹ and X² should be hydrogen atoms. When X¹ and X² represent a halogen atom, they may be the same or different, and, for example, fluorine atom, chlorine atom, and the like are preferably used.

Type of salt of the compound represented by the aforementioned general formula (I) is not particularly limited, and, base addition salts, acid addition salts, amino acid salts, and the like can be used as the measuring reagent of the present invention. Examples of the base addition salts include metal salts such as sodium salts, potassium salts, calcium salts and magnesium salts and organic amine salts such as ammonium salts, triethylamine salts, piperidine salts and morpholine salts. Examples of the acid addition salts include mineral acid salts such as hydrochlorides, sulfates and nitrates, and organic acids such as methanesulfonates, paratoluenesulfonates, citrates, and oxalates. Examples of the amino acid salts include glycine salts, and the like. Among them, physiologically acceptable water-soluble salts can be suitably used for the measuring reagent and measurement method of the present invention. Further, the compounds represented by the general formula (I) in free forms and salts thereof may exist as a hydrate or a solvate, and such a hydrate or solvate may be used as the measuring reagent of the present invention. A type of solvent forming the solvate is not particularly limited, and examples thereof include solvents such as ethanol, acetone, isopropanol and the like.

When the amino group has a substituent, the compounds represented by the general formula (I) may have one or more asymmetric carbon atoms depending on the type of the substituent, and stereoisomers such as optical isomers or diastereoisomers may exist. Any of such stereoisomers in pure forms, arbitrary mixtures of stereoisomers, racemates and the like may be used as the measuring reagent of the present invention. Further, the compounds represented by the general formula (I) may form a lactone ring in the molecules, and it should be understood that such compounds forming a lactone ring also falls within the scope of the present invention. Further, optically active substances produced on the basis of the aforementioned formation of lactone also fall within the scope of the present invention. The compounds represented by the aforementioned general formula (I) can be readily obtained by the method described in International Patent Publication WO01/64664. Particularly preferred compounds include compounds of the aforementioned general formula (I) wherein the phenyl group on which R¹ substitutes is p-hydroxyphenyl group (2-[6-(4'-hydroxy)phenoxy-3H-xanthen-3-on-9-yl]benzoic acid, also referred to as HPF hereinafter in the present specification), or p-aminophenyl group (2-[6-(4'-amino)phenoxy-3H-xanthen-3-on-9-yl]benzoic acid, also referred to as APF hereinafter in the present specification). Specific synthetic methods for these compounds are disclosed in the examples of the aforementioned publication as ss-1F and ss-3F, respectively.

The compounds represented by the aforementioned general formula (I) and salts thereof have a property of reacting with peroxynitrite under mild conditions, for example, physiological conditions, to produce a fluorescein compound as a dephenylated compound (corresponding to a compound of the general formula (I) wherein the phenyl group on which R¹ substitutes is replaced with hydrogen atom) or a salt thereof. The compounds represented by the general formula (I) and salts thereof are substantially non-fluorescent, whereas the dephenylated fluorescein compound and salt thereof have a property of emitting fluorescence of strong intensity. Therefore, peroxynitrite can be measured with high sensitivity by reacting a compound represented by the aforementioned formula (I) or a salt thereof with peroxynitrite and then measuring fluorescence of the dephenylated compound or a salt thereof.

Further, the compounds represented by the aforementioned general formula (I) and salts thereof are characterized in that they do not substantially have reactivity with NO or superoxide, that is a precursor of peroxynitrite, under the aforementioned condition. Therefore, only peroxynitrite can be specifically measured by using a compound represented by the aforementioned general formula (I) or a salt thereof under physiological condition without being affected by NO or superoxide. For example, peroxynitrite localized in individual cells or specific tissue can be accurately and conveniently measured by using a compound represented by the general formula (I) or a salt thereof as a measuring reagent.

The term "measurement" used in the present specification should be construed in the broadest sense thereof including determinations, tests, detections and the like performed for the purpose of quantitative analysis, qualitative analysis, diagnosis or the like. The method for measuring peroxynitrite of the present invention generally comprises the steps of (A) reacting a compound represented by the aforementioned general formula (I) or a salt thereof with peroxynitrite, and (B) measuring fluorescence of a dephenylated compound produced in the aforementioned step (A) (corresponding to the compound of the general formula (I) wherein the phenyl group on which R¹ substitutes is replaced with hydrogen atom), or a salt thereof.

Fluorescence of the dephenylated compound or salt thereof can be measured by a usual method, and a method of measuring fluorescence spectra *in vitro,* a method of measuring fluorescence spectra *in vivo* using a bioimaging technique, or the like can be used. For example, when quantitative analysis is performed, it is desirable to create a calibration curve beforehand in a conventional manner. The measuring reagent of the present invention has a property of being easily taken up in a cell, and thus peroxynitrite localized in individual cells can be measured by a bioimaging technique with high sensitivity.

As the measuring reagent of the present invention, a compound represented by the aforementioned general formula (I) or a salt thereof per se may be used. The compounds may be added with additives usually used for preparation of reagents and used as a composition. For example, additives such as dissolving aids, pH modifiers, buffers and isotonic agents can be used as the additive for using the reagent in a physiological environment. An amount of each of these additives can be suitably selected by those skilled in the art. Such a composition is provided as a composition in an arbitrary form such as powdery mixture, lyophilized product, granule, tablet and solution.

### Example

The present invention will be explained more specifically by referring to examples. However, the scope of the present invention is not limited to the examples. HPF and APF used in the following example are compounds described as ss·1F and ss-3F, respectively, in International Patent Publication WO01/64664, and those produced according to the method described the aforementioned specification were used.

### Example 1

### (A) Preparation of peroxynitrite

Peroxynitrite was prepared according to a method described in literature (Pryor, W.A., et al, Free Rad. Biol. Med. 18, 75-83, 1995). In an amount of 138 mg (2.06 mmol) of sodium azide was put into a two-neck Erlenmeyer flask, added with 10 mL of water, dissolved and further added with a trace amount of 2 N aqueous NaOH to adjust pH to 12. The two-neck Erlenmeyer flask was immersed in an ice bath, and when ozone prepared by using an ozonator was bubbled in the aqueous sodium azide, the solution became yellow with time. When the yellow color started fading (after bubbling for 9 minutes), bubbling of ozone was terminated, and the obtained solution was divided into two test tubes. The test tubes were immersed in dry ice/acetone bath to uniformly freeze the solution. The test tubes were left at room temperature, and about 500 µL of the solution partly thawed was put into Eppendorf tubes as a stock solution of peroxynitrite. The concentration of the obtained peroxynitrite solution was determined based on ε₃₀₂ = 1670 (M⁻¹cm⁻¹).

### (B) Reactions of HPF and APF with peroxynitrite

A 500 µM peroxynitrite solution was prepared by diluting the stock solution of peroxynitrite with 0.01 N aqueous NaOH. Further, for comparison, 2',7'-dichlorodihydrofluorescein (DCFH) was prepared by incubating 2',7'-dichlorodihydrofluorescein diacetate (DCFH-DA) in 0.01 N aqueous NaOH for 30 minutes with light shielding (Hempel, S.L. et al., Free Rad. Biol. Med., 27, 146-159, 1999). When each test compound solution was prepared, dimethylformamide was added as a cosolvent at a final concentration of 0.1 weight %. A solution of each test compound in a buffer (final concentration = 10 µM, 0.1 M sodium phosphate buffer (pH 7.4)) was added to a fluorescence cell, and fluorescence intensity was measured. Then, the mixture was added with the 500 µM peroxynitrite solution at a final concentration of 3 µM, and mixed well, and the fluorescence intensity was measured again to examine increase in fluorescence intensity after the addition of peroxynitrite. All the above procedures were performed at 37°C.

NOC13 (1-hydroxy-2-oxo-3-(3-aminopropyl)-3-methyl-1-triazole) was used as an NO generation system (Hrabie, J.A. et al., J. Org. Chem., 58, 1472-1476, 1993). A solution of each test compound in a buffer (final concentration = 10 µM, 0.1 M sodium phosphate buffer (pH 7.4)) was added with 100 µM NOC13, and stirred at 37°C for 30 minutes to generate NO in a fluorescence cell, and fluorescence intensity was measured. Further, a solution of each test compound in a buffer (final concentration = 10 µM; 0.1 M sodium phosphate buffer (pH 7.4)) was added with KO₂ (100 µM), and stirred at 37°C for 30 minutes to generate superoxide (O₂⁻) in a fluorescence cell, and fluorescence intensity was measured. The excitation wavelength/emission wavelength were 490 nm/515 nm for HPF and APF, and 500 nm/520 nm for DCFH.

The results are shown in Table 1. The measuring reagents of the present invention (HPF and APF) gave an increase in fluorescence by the reaction with peroxynitrite, whilst the reagents did not react with superoxide nor NO, and gave substantially no increase of fluorescence. DCFH greatly increased fluorescence by the reaction with peroxynitrite, and it also increased fluorescence by the reactions with both of superoxide and NO. These results revealed that peroxynitrite alone was successfully measured specifically by using the measuring reagent of the present invention without being affected by superoxide or NO.

**Table 1**

| Measured species | HPF | APF | DCFH |
|---|---|---|---|
| ONOO | 120 | 560 | 6,600 |
| O₂⁻ | 8 | 6 | 67 |
| NO | 6 | < 1 | 150 |

### Industrial Applicability

The reagent for measuring peroxynitrite of the present invention is characterized in that it does not react with superoxide or NO, a precursor of peroxynitrite, and enables specific measurement of peroxynitrite alone.

## Claims

1. A reagent for measuring peroxynitrite, which comprises a compound represented by the following general formula (I) or a salt thereof 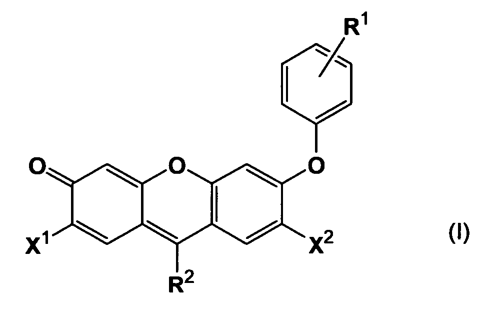 wherein R¹ represents a substituted or unsubstituted amino group, or hydroxy group; R² represents a 2-carboxyphenyl group which may be substituted; and X¹ and X² independently represent hydrogen atom, or a halogen atom.

2. The measuring reagent according to claim 1, which is 2-[6-(4'-hydroxy)phenoxy-3H-xanthen-3-on-9-yl]benzoic acid, or 2-[6-(4'-amino)phenoxy-3H-xanthen-3-on-9-yl]benzoic acid.

3. A method for measuring peroxynitrite, which comprises the steps of:
(A) reacting a compound represented by the aforementioned general formula (I) or a salt thereof and peroxynitrite, and
(B) measuring fluorescence of a dephenylated compound or a salt thereof produced in the step (A).
